# EUROPEAN PATENT SPECIFICATION

(11) **EP 1 596 461 B1**
(45) Date of publication and mention of the grant of the patent: **13.01.2010**
(21) Application number: 04011168.4
(22) Date of filing: 11.05.2004
(51) Int. Cl.: H01M 10/46, H02J 7/00, H01M 2/10

(54) **Combination of a power supply and an electrical appliance with a magnetic holder**
Kombination aus einer Energiequelle und einem elektrischen Gerät mit einem Magnethalter
Combinaison d'un dispositif d'alimentation électrique et un appareil électrique avec un support magnétique

(43) Date of publication of application: 16.11.2005
(73) Proprietor: Concens A/S, 6715 Esbjerg N (DK)
(72) Inventor: Jorgensen, Jorgen Peder, 6710 Esbjerg V (DK)
(74) Representative: Gregersen, Niels Henrik

(56) References cited:
- EP-A- 0 823 717
- US-A- 5 633 574
- US-A- 5 703 461

## Description

### FIELD OF THE INVENTION

The present invention relates to a power supply and an electrical appliance held together by a magnetic holder.

### BACKGROUND OF THE INVENTION

From US patent No. 5,763,112, a method and structure for attaching a battery to an electrical device by the use of a magnetic material is disclosed. The method exploits two magnetic dipoles, with one dipole attached to the electrical device and one attached to the battery. The dipole force then precludes improper attachment of the battery to the electrical device. However, when peeling off the battery from the said electrical device, a considerable force must be applied in order to break the magnetic attraction.

Furthermore, the following patents relates to batteries, which are equipped with magnets: JP07335270, JP9007568, JP2000277173, JP2000231910 and US 6,007,363.

It is a general disadvantage, especially for children or elderly people that considerable force has to be applied to remove battery packs from electrical appliances where the battery pack is attached to the appliance by means of magnets.

Therefore, it is the purpose of the invention to provide a magnetic holder system between an electrical appliance and a battery pack or other power supply, where the magnetic holder system can be deactivated again without great force.

### DESCRIPTION / SUMMARY OF THE INVENTION

This purpose is achieved by a combination of a power supply and an electrical appliance, where the appliance and the power supply are connectable by a rotational connection for relative rotation between the power supply and the appliance. The connection comprises magnetic holding means with a magnetic force in an interaction region between the power supply and the appliance. It further comprises means for varying the attracting force by rotation of the power supply relatively to the appliance.

The force for the magnetic holding means can be varied by rotation mutually between the power supply and the appliance. This implies that in one angular position between the power supply and the appliance, the force may be highly attractive, which is suitable for a secure holding of the power supply and the appliance together, whereas in a second angular position achieved by rotating the power supply relatively to the appliance, the force is much lower, suitable to easily release the holding means. For instance, the lower force may be effectively vanishing such that the power pack is easily removed from the appliance, or the appliance removed from the power supply.

For children or elderly people, the force for rotating a power supply connected to an appliance - or alternatively to rotate the appliance - is much easier than grabbing the power supply and the appliance and disconnect these by considerable pulling force. The reason lies in the fact that much less force is needed to move a magnet laterally in a magnetic field than to move it against the magnetic field. Furthermore, it is easier to grab a device for rotation than for pulling.

The rotation of the power supply relatively to the appliance has to be understood as a rotation of the power supply when connected to the appliance, or alternatively, a rotation of the appliance when connected to a stationary power supply, or even a relative rotation when both the power supply and the appliance are rotated.

According to the invention the holding means include a first holding element comprised by the power supply and a second holding element comprised by the appliance, the first and second holding elements comprising two mutually interacting magnets or a combination of a magnet and at least one magnetically interacting metal element.

The means for varying the attracting force are configured for varying the size of the interaction region by rotation of the power supply relative to the appliance. In practice, the interaction region is the region, where the pole of a first magnet faces the pole of a second magnet or, alternatively, where the pole of the first magnet faces an interacting metal element. Thus, the size of the interaction region may be varied by displacing a magnet laterally with respect to the other magnet or metal element, such that a change is obtained in the area by which the poles of the two magnets face each other or where the magnet and the metal piece face each other.

According to the invention the power supply is a battery or a battery pack. For example, such a battery pack may contain a number of power cells such a NiMH (nickel metal hydride) cells or NiCd (nickel cadmium) cells. For example 20 cells in series, each having a voltage of 1.2 V yielding 24 V, which is convenient for powering an actuator motor. According to the invention the electrical appliance is a control device for an actuator. It may be attached to a convent location, for example the underside of a hospital bed, where the appliance as a control box for actuators may be used for lifting and lowering different part of the hospital bed.

In a further embodiment, the first and the second holding means also comprise electrical terminals for electrical contact between the power supply and the appliance. For example, the magnets and the optionally employed interacting metal elements may themselves act as electrical terminals. In certain cases with certain materials, a direct sliding of one magnet on the surface of the opposing magnet does not lead to damage as described above, and this embodiment may be employed. Alternatively, not the magnets may touch each other but other elements, for example metallic elements included in the holding means. The latter may be the case, where metal elements are embedded in the magnetic element but extend slightly from the surface of the magnetic element such that the surface of the magnet is protected against damage by part sliding on the surface of the magnet.

In certain situations, it may be of interest to stop the supply of electricity to the appliance very quickly, typically in emergency situations. In order to facilitate a quick power stop, the power supply may comprise a safety switch for disconnecting electrical contact between the power supply and the appliance.

If a power source and an appliance are connected, fabrication tolerances may result in a not optimal connection between the electrical terminals. In order to improve such a situation, in a further embodiment, the combination according to the invention comprises electrical terminals for electrical contact between the power supply and the appliance, where at least one of the electrical terminals is mounted movable to take account for manufacturing tolerances between the power supply and the appliance in order to assure safe electrical contact.

For example, the power source, and the appliance may be constructed such that during connection, the holding or repellent magnets do not touch each other but face each other with a short distance. During rotation, the magnets would in this case not slide upon each other but would be smoothly displaced laterally such that during rotation, that part of a magnet that faces the opposite magnet - namely the interaction region or interaction section - increases or decreases. The advantage is that a force can be accomplished without the surface of the magnets being damaged during a sliding motion of one magnet surface on another magnet surface, or of one magnet surface on a metal element.

In a practical embodiment, the appliance has a recess for insertion of at least part of the power supply into the recess and is configured for rotation of the power supply relative to the recess. For example, the power source may be cylindrical in a corresponding recess. However, also a power source with a square or rectangular cross section may be placed rotatably in a cylindrical recess. Different embodiments are possible. However, the important aspect is that the power supply and the appliance are rotatably connected in whatever way.

The variation of the magnetic force in a combination according to the invention may also be extended to include a repelling force, such that a rotation may change the force from a strong attraction through a vanishing force into a repellent force. The advantage is that the power source and the appliance upon relative rotation are released from the attractive connection and pushed away from each other.

Therefore, in a further embodiment, the power supply has a first magnetic element and the appliance has a second magnetic element arranged for mutual repellent interaction in an interaction section. The interaction section would be different from the interaction region, or in other words, the relative angular orientation between the power source and the appliance is different for the force to be attracting than for the force to be repellent. Thus, a disconnection of the power source from the appliance or a disconnection of the appliance from the power source is further facilitated. The interaction section can be activated when a pole of a first magnet comprised by the power supply faces a pole with equal (repelling) polarity of second magnet comprised by the appliance.

Such a disconnection with repellent force is especially of interest in the case, where the combination comprises a sealing, for example an o-ring, between the power supply and the appliance when the power supply and the appliance are mutually connected. The sealing may be used for sealing a space between the power supply and the appliance, for example to protect magnets and/or electrical terminals against moisture or dust. Such a sealing may make a disconnection more difficult, because not only has the magnetic force to be overcome, but also the possible retaining force of the sealing. In this case, a repellent force helps the disconnection of the power source and the appliance.

In a further embodiment, the first holding means are arranged at one end of the power supply. This is convenient but not necessary. For example, the holding means could be arranged at the side wall of the power supply.

In a yet a further embodiment of a combination according to the invention the appliance is fitted with magnets, for fastening the appliance to a magnetic support. The support may be equipped with a metal plate upon which the appliance is mounted and held by magnets. However, other mountings are possible.

### SHORT DESCRIPTION OF THE DRAWINGS

The invention will be explained in more detail with reference to the drawing, where
- FIG. 1: shows three different embodiments of a power supply module together with an electrical appliance,
- FIG. 2: shows the power supply module while inserted into the recess of the electrical appliance,
- FIG. 3: gives a schematic view of the configuration of magnets and electrical terminals of the power supply module,
- FIG. 4: shows different possible embodiments for varying magnetic configurations,
- FIG. 5: shows a schematic view of that end of the power supply module, which has to be inserted into the electrical appliance, together with electrical terminals and magnets, and the corresponding configuration of terminals and magnets in the electrical appliance,
- FIG. 6: shows terminals and magnets on the power supply module and electrical appliance respectively, where they are mounted movable in order to secure safe electrical connection,
- FIG. 7: is a transparent view of the recess in the electrical appliance, showing a ring shaped water-tight junction,
- FIG. 8: shows the rear section of an electrical appliance, with several cables connections,
- FIG. 9: shows the electrical appliance as an actuator control box directly attached to an actuator,
- FIG. 10: shows a connector for a remote control attached to the rear end of the electrical appliance,
- FIG. 11: shows a remote control,
- FIG. 12: shows four different front sections for remote controls,
- FIG. 13: shows the remote control device from the rear; furthermore, a plate with a magnet is displayed,
- FIG. 14: shows an option for fixing the remote controlling device with a screw,
- FIG. 15: shows an attachment device, which is formed like a hook and is mounted on the rear section of the remote controlling device,
- FIG. 16: shows a hand held suspension device for the remote control,
- FIG. 17: shows the front section of the electrical appliance,
- FIG. 18: shows a different configuration of an electrical appliance,
- FIG. 19: illustrates an alternative construction, where the power supply module has a rectangular cross section but still may be rotated in the appliance,
- FIG. 20: is a cross section of the appliance in an embodiment.

### DETAILED DESCRIPTION / PREFERRED EMBODIMENT

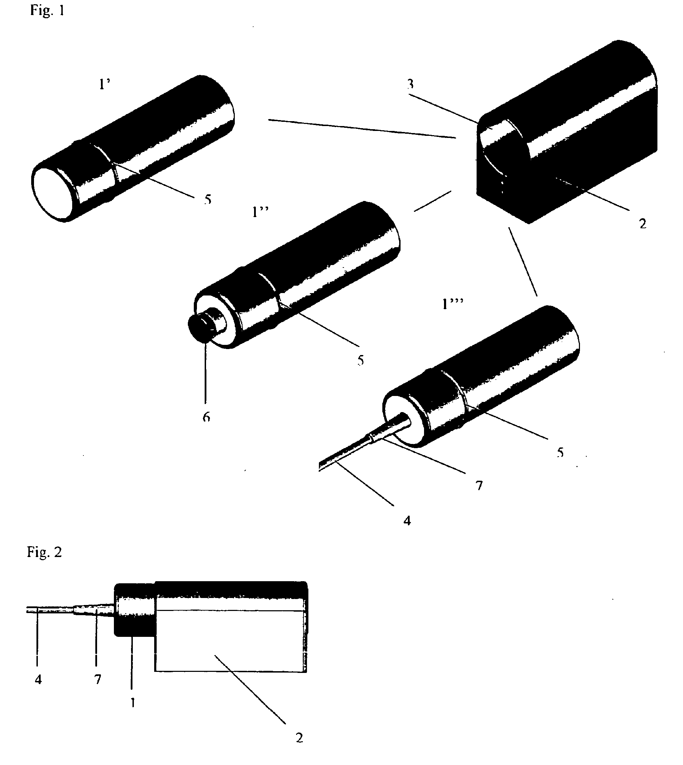

On fig. 1, three different embodiments 1', 1'', 1''' of a power supply module 1 are shown together with an electrical appliance 2. The electrical appliance 2 is constructed in such a way that it contains a recess 3, into which at least a part of the power supply 1 can be inserted. Without being restricted to this embodiment, the power supply 1 is, in what follows, thought to have a cylindrical shape, as shown on fig. 1. The power supply module 1 can be a single battery 1', a battery pack 1'' containing several batteries, or simply a power supply module 1''' (not according to the invention) which is connected to the mains supply through a wire 4. On the power supply module 1''', a cable take-off is shown 7, for the connection of wire 4.

The power supply module 1 is equipped with an o-ring 5, which is a ring shaped sealing comprised of a water proof distortable material. Thus, if the power supply module 1 is inserted into the recess 3, the effect is a water-tight jointing protecting the volume of the recess 3 between the power supply 1 and the electrical appliance 2 against water damage, dust and likewise.

The second embodiment 1'' is a battery pack which is equipped with a safety switch 6 for disconnecting electrical contact between the power supply 1 and the appliance 2 in emergency situations. Such a safety switch may be activated by a push on the illustrated button.

On fig. 2, the power supply module 1 is shown when mounted in the recess 3 of the electrical appliance 2. The power supply module 1 is constructed in such a way that it can be rotated with respect to a rotation axis, while it is mounted in the recess 3 of the electrical appliance 2. The axis in question is the cylindrical axis of the power supply module 1.

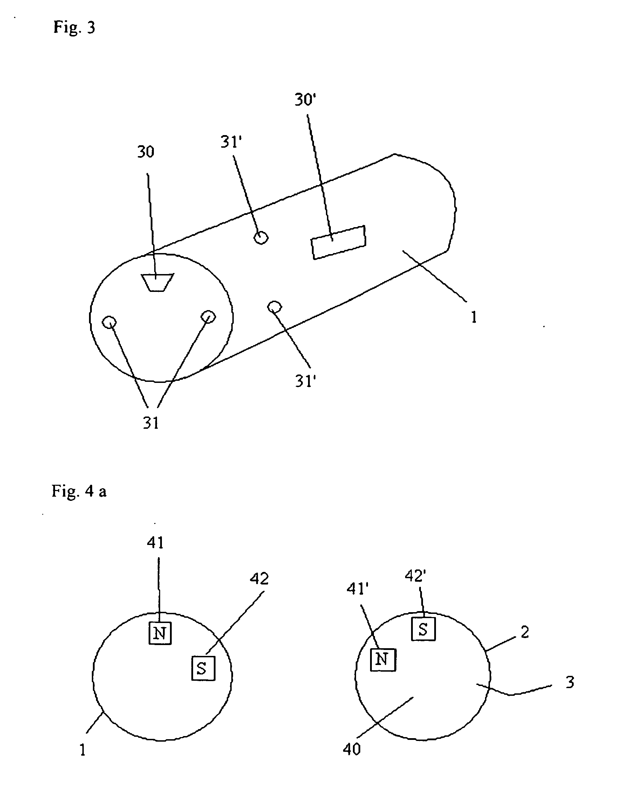

On fig. 3, a power supply module 1 is shown, with a magnet 30 attached to it at a decentralised position with respect to the rotation axis. Similarly, a ferromagnetic material, like a magnet or a metal element (not shown) is correspondingly located at the bottom of the recess 3 for correct positioning of the power supply module in the recess 3. Alternatively, the magnet 30' may be placed on the side of the power supply module 1.

When the power supply 1 is inserted into the recess 3, a thorough holding of the power supply 1 in the recess 3 will only be achieved if the power supply is oriented correctly such that the magnet 30 is cooperating with a corresponding magnet or metal element in the recess 3. This way, it is assured that the electrical terminals 31 of the power supply module 1 and the electrical appliance 2 will be situated correctly with respect to each other.

The magnet 30, 30' and the ferromagnetic material can be interchanged or placed differently than depicted on fig. 3. Instead of placing a magnet 30 on the power supply module 1 and a metal element in the recess 3, a magnet may be located in the recess 3, and the power supply module 1 may be equipped with a cooperating metal element.

This way, the power supply module 1 will "stick" to the electrical appliance 2 in the desired orientation and cannot fall out of the electrical appliance 2. Electrical terminals 31 are positioned at the end of the power supply module 1 or, alternatively as terminals 31' at the side wall of the power supply 1. The electrical appliance 2 is in these cases equipped with corresponding electrical terminals.

By rotating the power supply module 1 inside the recess 3 of the electrical appliance 2 with respect to the cylindrical axis, the magnetic attraction can be broken as the magnets are laterally displaced from each other. Such a lateral displacement is much easier to achieve than counteracting the magnetic force by simply pulling the power supply module 1 out of the electrical appliance 2. In fact, the force necessary to break the magnetic attraction by this rotational movement is at least ten times smaller than the force one has to apply by a direct pull without first rotating the power supply module 1. This is especially advantageous for children or elderly people. Furthermore, it is easier to grab a device for rotation than for pulling. A rotation of the power supply module also disconnects the terminals 31, 31'.

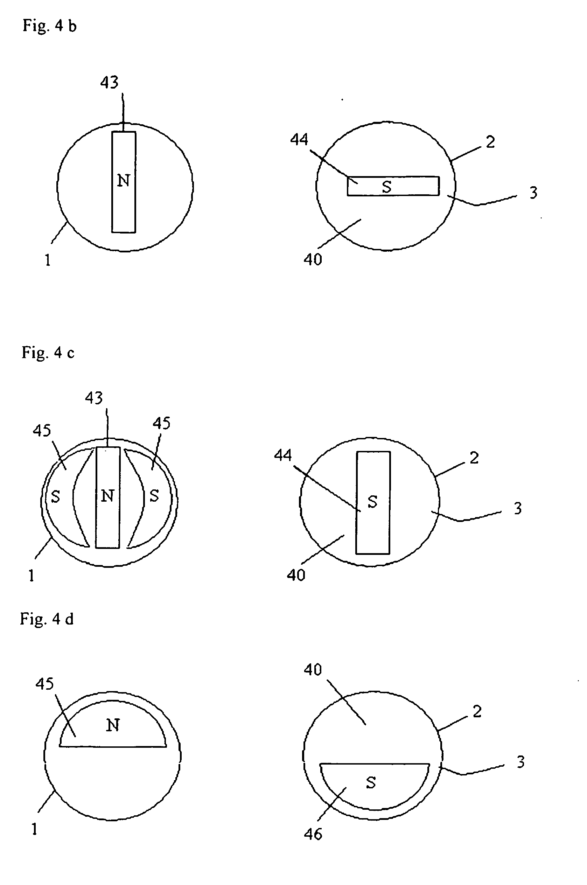

On fig. 4, different possible embodiments are shown for varying magnetic configurations. In fig. 4a, two magnets 41 and 42 of the power supply module 1 with opposite polarity, indicated by N for north pole and S for south pole, cooperate by two corresponding magnets 41' and 42' situated at the bottom 40 of the recess 3 in the electrical appliance 2. A holding position is obtained between the power supply module 1 and the electrical appliance 2, when the north pole of a magnet from the power supply module 1 faces a magnet with a south pole of the electrical appliance 2 and vice versa. In the configuration of fig. 4a a 90 degrees turn results in two poles of equal polarity facing each other which results in a repellent force between the power supply module 1 and the electrical appliance 2. Between the attracting and the repellent force, the force undergoes a smoothly varying change from attraction to repel.

In figure 4b, the variation of the force from attraction - namely when the north 43 faces the south 44 poles - to a repellent force varies in a different way. When the rod-like south pole 44 is normal to the rod-like north pole 43, the central parts of the poles still face each other, but the attraction of this small part is smaller than if the two rod-like poles are aligned. Thus, an attracting force is given at all times as long as the two rod-like magnets faces each other, but the force is varied by rotation of the power supply module 1 relative to the electrical appliance 2. Alternatively, one may use rods with a north pole at one end and a south pole at the opposite ends, also yielding an attractive force for a range of orientations and a repellent force for another range of orientations. If in addition, as illustrated in fig. 4c, additional poles 45 are introduced, a repellent force may be obtained in dependence of the angular positioning.

In fig. 4d, the configuration is such that a force between the magnets 45 and 46 may be varied from a highly attractive force to a practically vanishing force at a rotation through 180 degrees. The number of principles is in no way exhaustive, it merely serves the fact to illustrate the variety of possibilities that exist.

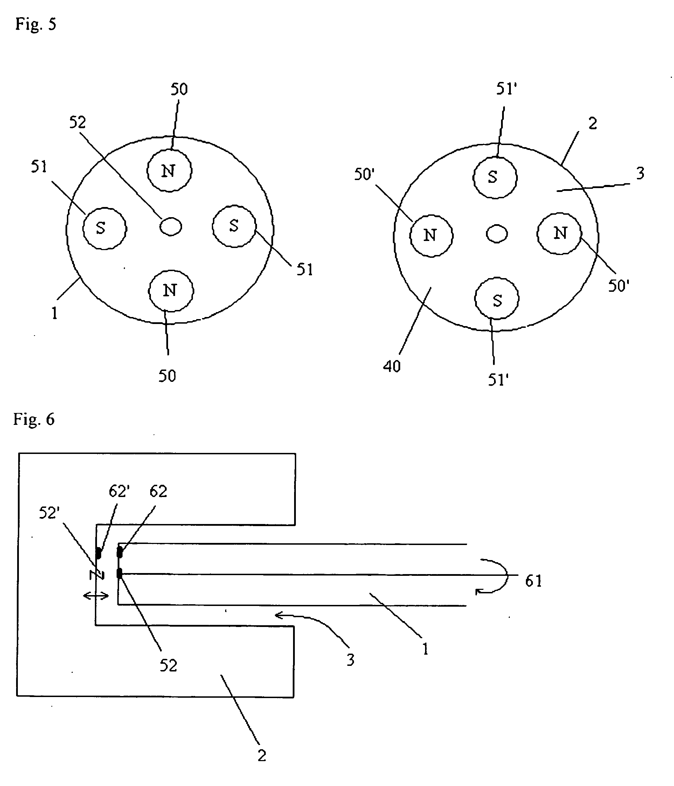

Fig. 5 gives a schematic view of that end of the power supply module 1, which has to be inserted into the recess 3 of the electric appliance 2. The figure shows that this end is equipped with four magnetic poles, two north poles 50, and two south poles 51, and a nonmagnetic electrical terminal 52. The terminal 52 acts as a positive electrical terminal of the power supply module 1, and the magnetic south poles 51 acts as a negative electrical terminal. With this configuration of terminals and magnets on the power supply module 1, the electrical appliance 2 is thought to have a similar configuration of magnets 50, 51 and terminals 52' at the button 40 of the recess 3. At the button 40 of the recess 3, it is the two magnetic north poles 50' that act as negative electric terminals. Thus, when the power supply module 1 is inserted into the recess 3, the magnetic attraction between the poles 50, 51 on the power supply module 1 and corresponding poles 50', 51' in the recess 3 of the electric appliance 2 will ensure the correct alignment of the power supply module 1 in the recess 3 of the appliance 2. Again, the magnetic attraction can be broken by rotating the power supply 1 with respect to the electrical appliance 2 around an axis coinciding with the cylindrical axis of the power supply module 1. In this case, if the power supply module 1 is rotated relatively by an angle of approximately π/2, the magnetic north poles 50 and the south poles 51 of the power supply module 1 will be positioned opposite to the magnetic north poles 50' and south poles 51' of the electrical appliance 2. The power supply module 1 will thus be subject to a repellent force, which will push it out of the recess 3, by which a change in the power supply module 1 is facilitated even for elderly or weaker individuals.

The positioning and the number of magnets and terminals may vary in dependence of the desired configuration. Also, the south poles and the north poles may both be used as electrical terminals, or electrical terminals may not be combined with the magnets.

In order to secure a safe electrical connection between the power supply 1 and the electrical appliance 2, at least one of the electrical terminals on the appliance 2 or the power supply module 1 is mounted movable to take account for manufacturing tolerances between the power supply module 1 and the electrical appliance 2. This is illustrated in more detail in fig. 6. In this case, the central terminal 52 has a corresponding counterpart 52', which is mounted with a suspension 60, for example resiliently, which is also illustrated by an arrow in the drawing, allowing a movement in the direction parallel with the rotation axis 61. Likewise, a metal element or magnet 62' may be mounted movably if this serves as electrical terminals. For the magnetic force, a direct contact between opposing magnets 62 and 62' is not strictly necessary. In fact, in some cases a direct contact may be advantageously be avoided in order not to damage brittle magnets. Thus, the power supply 1 and the recess 3 in the electrical appliance 2 may be constructed such that the electrical terminals 52, 52' are securely achieving contact during connection, whereas the magnets exerting force do not touch each other.

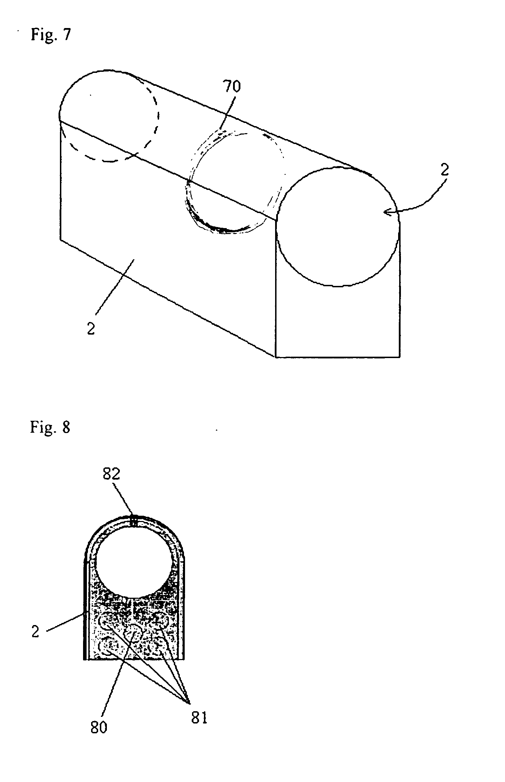

Instead of providing a sealing on the power supply module 1, as it is illustrated in FIG. 1, a sealing may be provided in the appliance. On fig. 7, a transparent view of the recess 3 in the electrical appliance 2 is shown displaying a ring shaped sealing 70 comprised of a water proof distortable material. Thus, if the power supply module 1 is inserted into the recess 3, the effect is a water-tight jointing that is protecting the volume of part of the recess 3 between the power supply 1 and the electrical appliance 2 against water damage, dust and likewise. The location and thickness of the sealing 70 may be different than shown on fig. 7 - it may be located at the outer opening of the recess 3 or further towards the bottom of the recess 3.

Fig. 8 shows a rear view of the embodiment of the electrical appliance 2, where the appliance is a control box for actuators. The rear end comprises one cable connector 80 for a cabled external emergency switch and four other cable plugs 81 for four actuators. The appliance 2 is constructed for controlling four actuators. In addition, the electrical appliance 2 is equipped with a power indicator 82 for indicating, whether a power module has been connected correctly such that sufficient power is available. The power indicator 82 may be a colour changing diode which also reveals, whether the power is sufficient when a battery pack is used. The number, and placement of the cable take-off's, and battery indicator, may be different than those shown on fig 8.

When the power supply is a battery pack, it may contain a number of power cells such as NiMH (nickel metal hydride) cells or NiCd (nickel cadmium) cells. For example 20 cells in series with each having a voltage of 1.2 V yields 24 V which is convenient for powering an actuator motor, where a 24 V power supply has a 10-20% higher efficiency than as 6 V power supply. The necessary current is lower, and as a consequence, also the cables can be made thinner.

The electrical appliance 2 as shown in fig. 8 may be attached to a convenient location, for example the underside of a hospital bed, where the appliance as a control box for actuators may be used for lifting and lowering different part of the hospital bed.

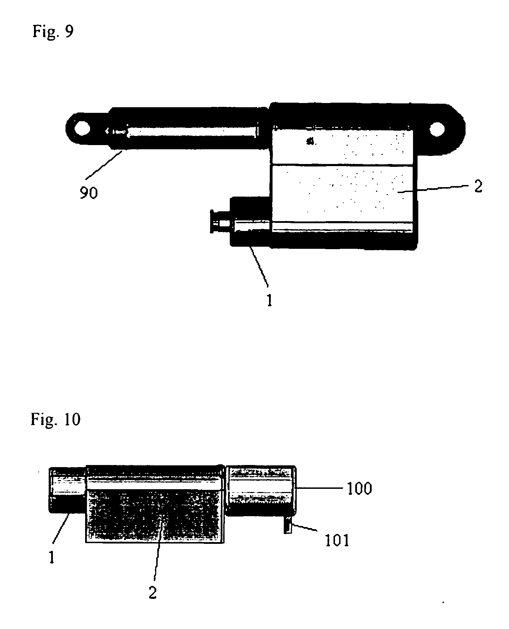

Alternatively, the electrical appliance 2 as an actuator control box may be directly attached to an actuator 90 as shown on fig. 9. This is an alternative or a supplement for the connection of several actuators to the electrical appliance by cables. Thus, one electrical appliance 2 is sufficient for controlling several electrical devices, such as actuators for hospital beds, where several actuators may be needed to raise, and/or lower different parts of the bed.

A connector 100 for a remote control 110 may be attached to the rear end of the electrical appliance 2 as shown on fig. 10. The connector 100 may communicate to a remote control 110 by means of a cable 101, or alternatively by radio signals or infrared signals.

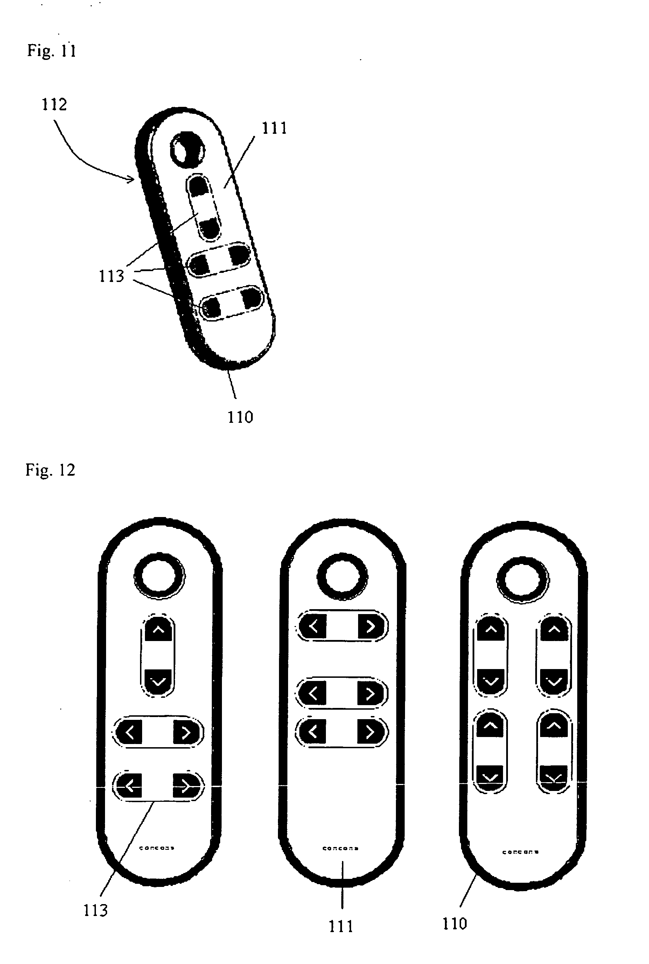

An embodiment of the remote control device 110 is shown on fig 11 comprising a replaceable front section 111 and rear section 112 containing a printed circuit board (PCB). The front section 111 may be constructed conveniently for controlling different kinds of electrical appliances 2 and possibly other electrical devices connected to the appliance 2.

It has been found that an advantageous, cost efficient solution can be achieved - both for the manufacturer and the costumer - by using the same rear section 112 including the PCB in all possible configurations of remote control devices 110 and by manufacturing different front sections 111 with a different set of buttons 113 for different purposes. Since all the possible configurations and control functions may be embedded in the PCB, it is sufficient for the provider to fabricate only one rear section 112 including the PCB and depending on the needs of the customer to provide a correct front section 111. Alternatively, different front sections may be available for the customer in order to change, for example to extend the remote control device 110 for the purchased system to control further electrical devices. This reduces the costs for the provider as well as for the customer, because one PCB can be used for a number of applications instead of several PCB constructions in dependence of the actual need. In this connection, it should be emphasized that the PCB is an expensive part of the remote control device 110.

On fig. 12, four different front sections 111 for remote controls 110 are shown, with different configurations of the buttons 113 and with different functions, for example a door opening function or a help call function in addition to control of actuators. The configurations shown on fig. 12 is for illustration and not exhaustive.

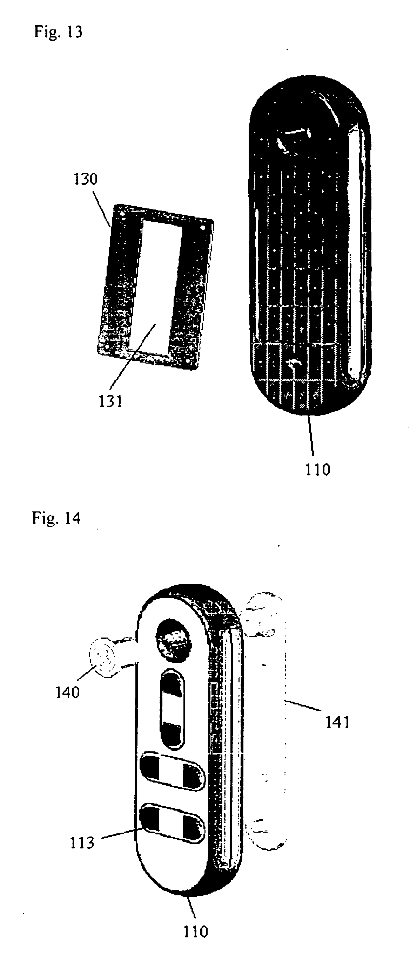

On fig. 13, the remote control device 110 is shown from the rear. Furthermore, a plate 130 with a magnet 131 is displayed. The plate 130 can be fixed to the rear end of the remote control device 110, thus making it possible to hang the remote controlling device 110 on an iron surface or on other magnets or magnetic material.

On fig. 14, another option for fixing the remote controlling device 110 with a screw 140 is shown. This makes it possible to attach the remote controlling device 110 to a wall to which a corresponding back fixing mechanism 141 has been mounted. This may be necessary where a more firm attachment is needed.

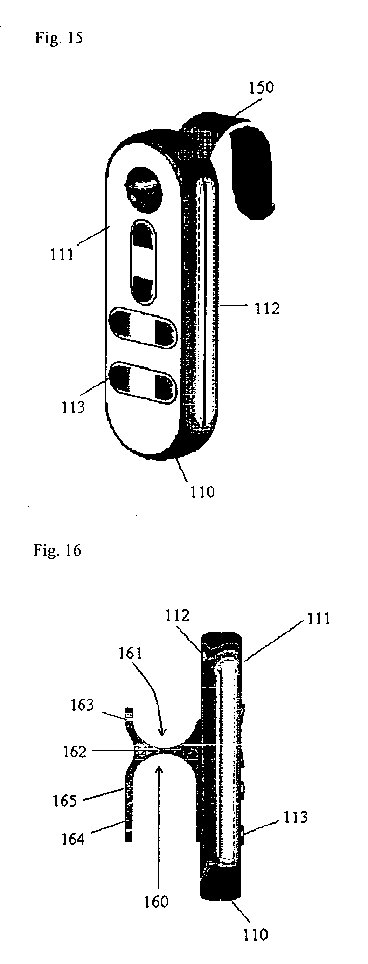

On fig. 15, yet another attachment device 150 is shown. This attachment device 150 formed like a hook is mounted on the rear section 112 of the remote controlling device 110 and makes it possible to hang the remote controlling device on for example a pipe, like those used for hospital beds. Alternatively, the remote control device 110 may be equipped with a corresponding fastener or resilient hook for fastening the remote control device 110 to the pocket of a shirt or of a pair of trousers, which is convenient for the personnel in case that the communication between the remote control device 110 and the appliance 2 is by radio signals or by infrared radiation. In many cases, the appliance 2 as a control box may be hidden such that a radio signal connection may be preferred to an infrared signal.

The attachment device 165 for the remote controlling device 110 shown on fig. 16, consists essentially of the two concavities 160 and 161, which are formed by the remote controlling device 110 itself, the two flat, or semi flat, sections 163 and 164, and an intermediate section 162. Thus it will be possible to hold the remote controlling device 110, by slipping the intermediate section 162 between two fingers, in such a way that the remote controlling device 110 is situated at the forehand. This may be useful for nurses or other care takers, because it will make it possible for them to hold the remote controlling device 110, and at the same time use the hands fore something else, e. g. for lifting the patient.

The mentioned remote control devices 110 may be constructed water tight in order to avoid damage in a humid environment or in environments, where these may be exposed to liquids, for example in a hospital.

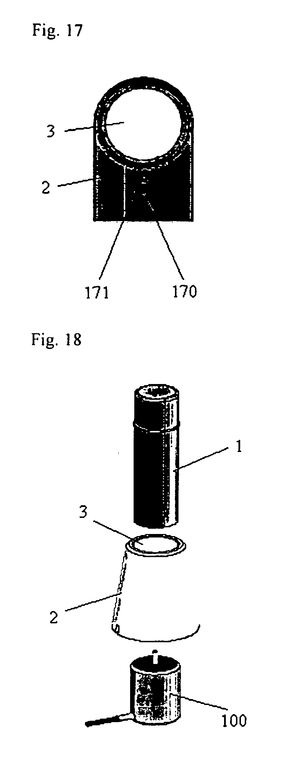

On fig. 17 the front section of the electrical appliance 2 is shown, an entry 170 for connecting the remote control 110 and an emergency triggering mechanism 171 is shown. When the remote control 110, is held in front of the entry 170 in a specified time span, e. g. a few seconds, the electric appliance 2 will recognize it, and the remote controlling device 110 can be used to operate the electrical appliance 2. This is a tremendous advantage, because the same remote controlling device 110 can be used to operate many different electrical appliances 2. This means for example that a nurse don't have to change remote controlling devise every time she wants to operate another hospital bed. All she has to do is, to use the same remote controlling device 110 and entry it to the appliance 2 she wants to control.

On fig. 18, a different configuration of an electrical appliance 2 is illustrated with a recess 3 for receiving the power supply unit 1. Also in this configuration, a connector 100 for communication with a remote control 110 may be attached.

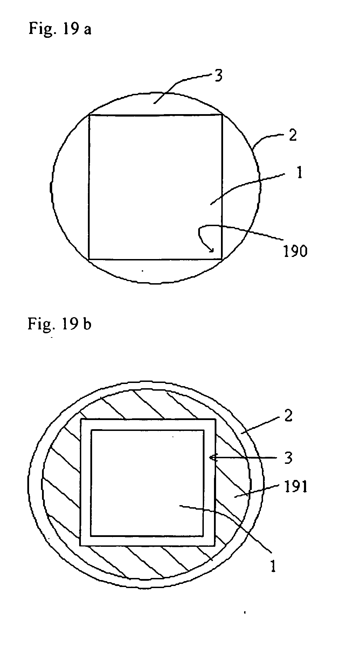

Fig. 19 illustrates an alternative construction, where the power supply module 1 has a rectangular cross section but still may be rotated in the appliance 2. In fig. 18a, a rectangular power supply unit 1 is supported by the recess 3 of the appliance 2 along its edges 190. For a better support, the edges may be rounded. In fig. 18b, the recess 3 itself is rectangular in cross section in order to receive the rectangular power supply 1. However, in order to be able to rotate the power supply unit 1 in the appliance 2, a rotational support 191 with the recess 3 is rotationally mounted in the appliance 2.

Other application in connection with actuators is for agricultural machines, where relatively strong and small actuators can be easily driven with a remote control 110 and a battery pack 1" as a power source. In this connection, it should be emphasized that a number of linear actuators are constructed such that they are self locking, which implies that the force exerted from outside on the actuator does not change the adjustment of the actuator. The result is that power is only needed for by motor force to change the length, in case of a linear actuator, or the angle, in case of a turn actuator.

In order to avoid heat damage to the power supply unit 1 of the invention, for example a battery pack 1", the power supply unit 1 may be provided with a temperature sensor, which in connection with an automatic switch that disconnects the power supply unit 1 if the temperature rises above a certain pre selected temperature. This eliminates the danger for fire in case of short circuits and overload in the power supply unit 1.

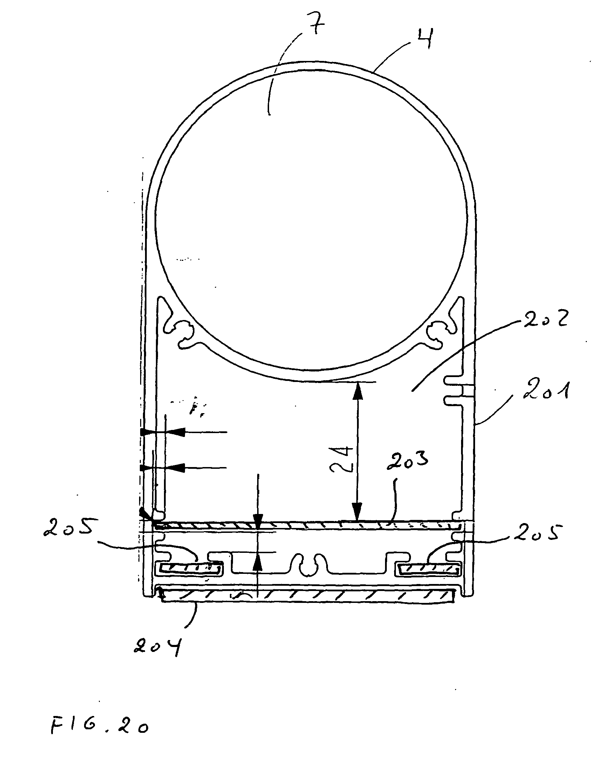

In fig. 20, a cross section of a possible embodiment of a housing 201 of an appliance 4 is shown. The shown section of the housing 201 may be produced by extrusion, for example aluminium. The housing 201 comprises the recess 7 and a cavity 202, into which electronics on a printed board 203 or in a chip may be placed. Furthermore, for fastening the appliance to a support, the support may be equipped with a metal plate 204 upon which the appliance is mounted and held by magnets 205. However, other mountings are possible.

## Claims

1. Combination of a power supply and an electrical appliance, where the appliance and the power supply are connectable by a rotational connection for relative rotation between the power supply and the appliance, the connection comprising magnetic holding means with a magnetic force in an interaction region between the power supply and the appliance and means for varying the force by rotation of the power supply relatively to the appliance, wherein the holding means includes a first holding element comprised by the power supply and a second holding element comprised by the appliance, the first and second holding elements comprising two magnets facing each in the interaction region for mutually attractive interaction or alternatively comprising a combination of a magnet and at least one magnetically interacting metal element and wherein the means for varying the force are configured for varying the size of the interaction region during rotation of the power supply relative to the appliance due to a lateral displacement of the first holding element with respect to the second holding element, **characterised in, that** the power supply is a battery or a pack of batteries, and that the electrical appliance is a control device for at least one actuator.

2. A combination according to claim 1, wherein the first and the second holding means also comprises electrical terminals for electrical contact between the power supply and the appliance.

3. A combination according to claim 1 or 2, wherein the power supply comprises a safety switch for disconnecting electrical contract between the power supply and the appliance.

4. A combination according to any one of the preceding claims comprising electrical terminals for electrical contact between the power supply and the appliance, where at least one of the electrical terminals is mounted movable to take account for manufacturing tolerances between the power supply and the appliance for assuring safe electrical contact.

5. A combination according to any preceding claim, wherein the appliance has a recess for insertion of at least part of the power supply into the recess and is configured for rotation of the power supply relative to the recess, wherein the power supply is cylindrical.

6. A combination according to any single claim 1-5, wherein the appliance has a recess for insertion of at least part of the power supply into the recess and is configured for rotation of the power supply relative to the recess, wherein the power supply is rectangular and, wherein the appliance has a rotational support with the recess, that is rotationally mounted in the appliance.

7. A combination according to any preceding claim, wherein the combination comprises a sealing between the power supply and the appliance when the power supply and the appliance are mutually connected for sealing a space between the power supply and the appliance.

8. A combination according to any preceding claim, wherein the power supply has a first magnetic element and the appliance has a second magnetic element arranged for mutual repellent interaction in an interaction section.

9. A combination according to any single claim 1-8, wherein the first holding means are arranged at one end of the power supply.

10. A combination according to any single claim 1-9, wherein the appliance is fitted with magnets, for fastening the appliance to a metal support.

## Patentansprüche

1. Kombination aus einer Leistungsversorgung und einem elektrischen Gerät, wobei das Gerät und die Leistungsversorgung durch eine Drehverbindung für eine relative Drehung zwischen der Leistungsversorgung und dem Gerät verbindbar sind, wobei die Verbindung magnetische Haltemittel mit einer Magnetkraft in einem Wechselwirkungsbereich zwischen der Leistungsversorgung und dem Gerät und Mittel zum Verändern der Kraft durch Drehung der Leistungsversorgung relativ zum Gerät umfasst, wobei die Haltemittel ein erstes Halteelement, das die Leistungsversorgung umfasst, und ein zweites Halteelement, das das Gerät umfasst, aufweisen, wobei das erste und das zweite Halteelement zwei Magneten, die im Wechselwirkungsbereich einander zugewandt sind, für eine Wechselwirkung einer gegenseitigen Anziehung umfassen oder alternativ eine Kombination aus einem Magneten und mindestens einem magnetisch in Wechselwirkung stehenden Metallelement umfassen, und wobei die Mittel zum Verändern der Kraft konfiguriert sind, um die Größe des Wechselwirkungsbereichs während der Drehung der Leistungsversorgung relativ zum Gerät aufgrund einer seitlichen Verlagerung des ersten Halteelements in Bezug auf das zweite Halteelement zu verändern, **dadurch gekennzeichnet, dass** die Leistungsversorgung eine Batterie oder ein Satz von Batterien ist und dass das elektrische Gerät eine Steuervorrichtung für mindestens ein Stellglied ist.

2. Kombination nach Anspruch 1, wobei das erste und das zweite Haltemittel außerdem elektrische Anschlüsse für einen elektrischen Kontakt zwischen der Leistungsversorgung und dem Gerät umfassen.

3. Kombination nach Anspruch 1 oder 2, wobei die Leistungsversorgung einen Sicherheitsschalter zum Trennen des elektrischen Kontakts zwischen der Leistungsversorgung und dem Gerät umfasst.

4. Kombination nach einem der vorhergehenden Ansprüche mit elektrischen Anschlüssen für einen elektrischen Kontakt zwischen der Leistungsversorgung und dem Gerät, wobei mindestens einer der elektrischen Anschlüsse beweglich angebracht ist, um Herstellungstoleranzen zwischen der Leistungsversorgung und dem Gerät zu berücksichtigen, um einen sicheren elektrischen Kontakt sicherzustellen.

5. Kombination nach einem vorhergehenden Anspruch, wobei das Gerät eine Aussparung zum Einsetzen mindestens eines Teils der Leistungsversorgung in die Aussparung aufweist und zur Drehung der Leistungsversorgung relativ zur Aussparung konfiguriert ist, wobei die Leistungsversorgung zylindrisch ist.

6. Kombination nach einem einzelnen Anspruch 1-5, wobei das Gerät eine Aussparung zum Einsetzen mindestens eines Teils der Leistungsversorgung in die Aussparung aufweist und zur Drehung der Leistungsversorgung relativ zur Aussparung konfiguriert ist, wobei die Leistungsversorgung rechtwinklig ist und wobei das Gerät eine Drehlagerung bei der Aussparung aufweist, die im Gerät drehbar angebracht ist.

7. Kombination nach einem vorhergehenden Anspruch, wobei die Kombination eine Abdichtung zwischen der Leistungsversorgung und dem Gerät umfasst, wenn die Leistungsversorgung und das Gerät miteinander verbunden sind, um einen Raum zwischen der Leistungsversorgung und dem Gerät abzudichten.

8. Kombination nach einem vorhergehenden Anspruch, wobei die Leistungsversorgung ein erstes magnetisches Element aufweist und das Gerät ein zweites magnetisches Element aufweist, die für eine gegenseitige Abstoßungswechselwirkung in einem Wechselwirkungsabschnitt angeordnet sind.

9. Kombination nach einem einzelnen Anspruch 1-8, wobei die ersten Haltemittel an einem Ende der Leistungsversorgung angeordnet sind.

10. Kombination nach einem einzelnen Anspruch 1-9, wobei das Gerät mit Magneten zur Befestigung des Geräts an einem Metallträger ausgestattet ist.

## Revendications

1. Combinaison d'une alimentation et d'un appareil électrique, où l'appareil et l'alimentation peuvent être connectés par une connexion rotative pour une rotation relative entre l'alimentation et l'appareil, la connexion comprenant des moyens de support magnétiques avec une force magnétique dans une région d'interaction entre l'alimentation et l'appareil et des moyens pour modifier la force par la rotation de l'alimentation par rapport à l'appareil, dans laquelle les moyens de support comprennent un premier élément de support composé de l'alimentation et un deuxième élément de support composé de l'appareil, les premier et deuxième éléments de support comprenant deux aimants orientés chacun vers la région d'interaction pour une interaction d'attraction mutuelle ou comprenant, en variante, une combinaison d'un aimant et d'au moins un élément métallique interagissant magnétiquement, et dans laquelle les moyens pour modifier la force sont configurés pour modifier la taille de la région d'interaction pendant la rotation de l'alimentation par rapport à l'appareil du fait d'un déplacement latéral du premier élément de support par rapport au deuxième élément de support, **caractérisée en ce que** l'alimentation est une batterie ou un bloc de batteries, et **en ce que** l'appareil électrique est un dispositif de commande pour au moins un actionneur.

2. Combinaison selon la revendication 1, dans laquelle les premiers et deuxièmes moyens de support comprennent également des bornes électriques pour un contact électrique entre l'alimentation et l'appareil.

3. Combinaison selon la revendication 1 ou 2, dans laquelle l'alimentation comprend un commutateur de sécurité pour interrompre le contact électrique entre l'alimentation et l'appareil.

4. combinaison selon l'une quelconque des revendications précédentes, comprenant des bornes électriques pour un contact électrique entre l'alimentation et l'appareil, où au moins l'une des bornes électriques est montée de manière mobile pour prendre en compte les tolérances de fabrication entre l'alimentation et l'appareil pour garantir un contact électrique sûr.

5. Combinaison selon l'une quelconque des revendications précédentes, dans laquelle l'appareil comporte un évidement pour l'insertion d'au moins une partie de l'alimentation dans l'évidement et est configuré pour une rotation de l'alimentation par rapport à l'évidement, dans laquelle l'alimentation est cylindrique.

6. Combinaison selon l'une quelconque des revendications 1 à 5, dans laquelle l'appareil comporte un évidement pour l'insertion d'au moins une partie de l'alimentation dans l'évidement et est configuré pour une rotation de l'alimentation par rapport à l'évidement, dans laquelle l'alimentation est rectangulaire, et dans laquelle l'appareil comporte un support rotatif comportant l'évidement, qui est monté en rotation dans l'appareil.

7. Combinaison selon l'une quelconque des revendications précédentes, dans laquelle la combinaison comprend un élément d'étanchéité entre l'alimentation et l'appareil lorsque l'alimentation et l'appareil sont mutuellement connectés pour assurer l'étanchéité d'un espace entre l'alimentation et l'appareil.

8. Combinaison selon l'une quelconque des revendications précédentes, dans laquelle l'alimentation comporte un premier élément magnétique et l'appareil comporte un deuxième élément magnétique agencés pour une interaction de répulsion mutuelle dans une section d'interaction.

9. Combinaison selon l'une quelconque des revendications 1 à 8, dans laquelle les premiers moyens de support sont agencés à une extrémité de l'alimentation.

10. Combinaison selon l'une quelconque des revendications 1 à 9, dans laquelle l'appareil est pourvu d'aimants, pour fixer l'appareil à un support métallique.
